Europäisches Patentamt

European Patent Office

Office européen des brevets

(11) Veröffentlichungsnummer: **0 307 055 B1**

(12) **EUROPÄISCHE PATENTSCHRIFT**

(45) Veröffentlichungstag der Patentschrift: **13.05.92**

(21) Anmeldenummer: **88201939.1**

(22) Anmeldetag: **07.09.88**

(51) Int. Cl.⁵: **A01J 25/00**, A01J 25/04

(54) **Vorrichtung zum Herstellen von Käsemasse für Weichkäse.**

(30) Priorität: **11.09.87 DE 3730661**

(43) Veröffentlichungstag der Anmeldung:
**15.03.89 Patentblatt 89/11**

(45) Bekanntmachung des Hinweises auf die
Patenterteilung:
**13.05.92 Patentblatt 92/20**

(84) Benannte Vertragsstaaten:
**AT BE CH DE ES FR GB GR IT LI NL SE**

(56) Entgegenhaltungen:
**DE-A- 2 213 306**
**FR-A- 1 594 752**
**FR-A- 2 040 632**
**FR-A- 2 290 145**

(73) Patentinhaber: **UNILEVER NV**
**Burgemeester s'Jacobplein 1 P.O. Box 760**
**NL-3000 DK Rotterdam(NL)**

(84) Benannte Vertragsstaaten:
**BE CH DE ES FR GR IT LI NL SE AT**

(73) Patentinhaber: **UNILEVER PLC**
**Unilever House Blackfriars P.O. Box 68**
**London EC4P 4BO(GB)**

(84) Benannte Vertragsstaaten:
**GB**

(72) Erfinder: **Krause, Friederich**
**Hebelinger Strasse 14**
**W-8968 Durach b. Kempten (Allgäu)(DE)**
Erfinder: **Lehmbecker, Wolfgang**
**Nachtigallenweg 55**
**W-8060 Kempten (Allgäu)(DE)**
Erfinder: **Sonnenmoser, Hubert**
**Hieberstrasse 18**
**W-8960 Kempten (Allgäu)(DE)**

(74) Vertreter: **Mulder, Cornelis Willem Reinier, Dr.**
**et al**
**UNILEVER N.V. Patent Division P.O. Box 137**
**NL-3130 AC Vlaardingen(NL)**

## Beschreibung

Die Erfindung bezieht sich auf eine Vorrichtung zum Herstellen von Käsemasse für vorzugsweise Weichkäse wie Camembert und Brie bzw. ähnlichen Käsen, wobei diese Vorrichtung eine geschlossenen Transportsystem aufweist mit mehreren auf einer, wenigstens ein Teil des geschlossenen Transportsystems bildenden Transportbahn angeordnete Behälter, eine Station zum Einfüllen der dickzulegenden Milch in diese Behälter, eine Vorrichtung zum Schneiden der dickgelegten Milch zu Bruch und eine Station zum Ausgießen des Bruch-Molke-Gemisches in eine Auslaufrinne aufweist.

Eine bekannte Anlage dieser Art ist in DE-C 22.13.306 beschrieben und weist starr miteinander verbundene Fahrgestelle auf, die entlang einer kreisförmigen Bahn fahrbar angeordnet sind.

Zur kontinuierlichen Verwendung und zur Herstellung von verschiedenen Käsesorten ist diese Vorrichtung weniger geeignet, weil es wenig Spiel für Geschwindigkeitsänderungen im Herstellungsprozess und keine nennenswerten Leerstationen zur Reinigung der Behälter während der Verwendung erlaubt.

Der Erfindung liegt die Aufgabe zugrunde, die Vorrichtung zum mechanischen Herstellen von Käsemasse der eingangs beschriebenen Art so weiterzubilden, daß mit dieser unter Beibehaltung der Qualität, wie sie für solche Käse typisch ist, eine dauernd kontinuierliche Herstellung von verschiedenartigen Käsemassen hoher Qualität ermöglicht wird.

Diese Aufgabe wird erfindungsgemäß dadurch gelöst, daß die Behälter voneinander unabhängig auf einer Transportbahn eines geschlossenen Transportsystems abgesetzt sind und Die Behälter zweireihig um einen halben Durchmesser versetzt auf der Transportstrecke 3 geführt werden damit bei der Ausgießstation 12 bereits mit dem Ausgießen des nächsten Behälters angefangen werden kann, wenn der vorangehende Behälter noch nicht völlig entleert ist. Dadurch wird eine gleichbleibende Käsemassequalität eingehalten. In diesem Transportsystem ist hinter der Ausgießstation die verschiedenen Bearbeitungs-Stationen, am Ende der Bahn eine Reinigungs-Station für die Behälter vorgesehen.

Durch diese Maßnahmen kann permanent eine hohe Hygiene und damit eine hohe Qualität der Käse eingehalten werden.

Eine schonende Käsebruch-Herstellung und -Behandlung ist möglich, wenn die Milch- und Käsebruchbehandlungsstationen entlang einer im wesentlichen geraden Strecke der Transportbahn angeordnet sind.

Damit die Behälter stoß- und ruckfrei und ohne jegliche spürbare Erschütterung kontinuierlich bewegt werden können ist es empfehlenswert, daß die Behälter je einen, ggf mit zweckmäßigen Transportkufen verstärkten, flachen Boden aufweisen und damit direkt auf der Transportbahn abgestützt sind. Dieser Effekt wird noch gesteigert wenn die Transportbahn eine Vielzahl von parallel angeordneten Wellen aufweist, die mittels eines stufenlos regelbaren Triebwerkes angetrieben werden.

Die gute Reinigungsmöglichkeit der Behälter wird noch verbessert und die schonende Entleerung des Käsebruchs wird gesteigert, indem die Behälter als einfache, innen und aussen leicht zu reinigende, zylindrische Behälter mit flachem Boden ausgeführt sind, d.h. keine Auslaufstutzen oder ähnliche Verengungen aufweisen.

Ein Ausführungsbeispiel der erfindungsgemäßen Vorrichtung wird anhand der schematischen Zeichnungen im nachfolgenden beschrieben. Daraus ergeben sich zudem vorteilhafte Ausführungen. Es zeigt:

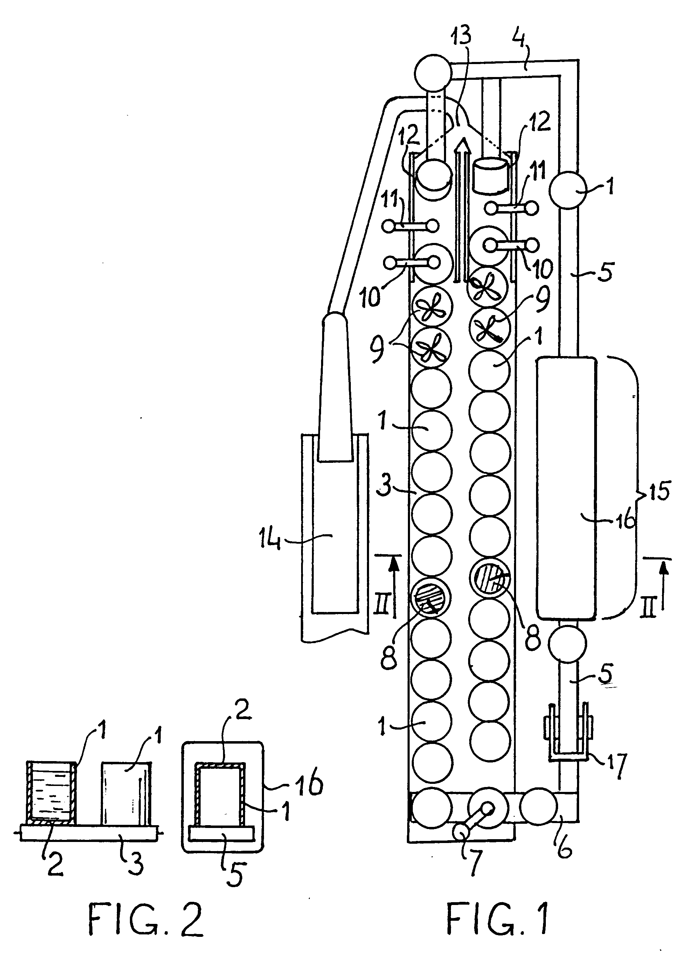

Fig. 1 eine schematische Aufsicht auf die gesamte Anlage und

Fig. 2 einen Querschnitt längs der Linie II-II der Fig.1.

Die Vorrichtung ist mit einer Mehrzahl von Behältern 1 versehen, die mit den flachen Boden 2 voneinander unabhängig direkt auf einer geschlossenen Transportbahn 3 bis 6 fahrbar abgesetzt sind. Diese Bahn weist zwei parallele, gerade Strecken 3, 5, die durch zwei Querverbindungsstrecken 4, 6 miteinander verbunden sind, auf.

Entlang der einen, geraden Strecke 3 sind hintereinander eine Einfüllstation 7 für Milch und Dicklegungsmittel, eine Schneidestation 8 für die dickgelegte Milch, eine Rührstation 9, eine Molkenabzugsstation 10, eine Wasserzugabestation 11 und eine Ausgießstation 12 angeordnet.

Bei den Behandlungsstationen sind die respektiven Behandlungsvorrichtungen wie Schneide- und Rührvorrichtungen zusammen mit den Behältern fahrbar. Am Ende der Behandlungsstrecke 3 der Transportbahn werden Molke und Käsebruch in eine Auslaufrinne 13 gegossen, durch die dieses Gemisch auf ein Filterband 14 gelangt, wo der Käsebruch vorentmolkt werden kann. Diese Käsemasse wird auf herkömmliche Weise weiterbehandelt.

In einer bevorzugten Ausführungsform ist wegen der einfachen Ausführung und der zuverlässigen Reinigung die Ausgießstation 12 mit einer Vorrichtung zum Umkippen und darauf umgekehrt auf die Transportbahn 3 setzen der Behälter 1 versehen und ist hinter der Reinigungsstation 15 eine Wendevorrichtung 17 zum Zurückführen der gereinigten Behälter in die Gebrauchslage vorgesehen.

Die entleerten Behälter 1 werden über die Querverbindungsstrecke 4 zur geraden Rückkehrstrecke 5 geführt und dort in einer Reinigungsstation 15 sorgfältig gereinigt. Darauf werden die gereinigten Behälter über der Querverbindungsstrecke zur Einfüllstation 7 geführt.

Zur Verhinderung der Kontamination des Molke-Bruchgemisches mit Reinigungsflüssigkeit während der Dauerreinigung ist die Reinigungsstation 15, z.B. mittels einer Haube 16 die mit Ein- und Austritts-Schleusen zum Durchlassen der auf der Rückkehrstrecke 5 geführten Behälter versehen ist, von der Umgebung abgeschlossen, um zu gewährleisten, dass der Reinigungsvorgang ohne Beeinträchtigung der Umgebung stattfinden kann.

**Patentansprüche**

1. Vorrichtung zum Herstellen von Käsemasse für vorzugsweise Weichkäse, die eine geschlossenen Transportsystems aufweist mit mehreren auf einer, wenigstens ein Teil des geschlossenen Transportsystems bildenden Transportbahn angeordneten Behälter, eine Station zum Einfüllen der dickzulegenden Milch in die Behälter, an der Bahn der Behälter angeordnete Vorrichtungen zum Schneiden der dickgelegten Milch zu Bruch und eine Station zum Ausgiessen der Behälter in eine Auslaufrinne, dadurch gekennzeichnet, dass die Behälter (1) voneinander unabhängig auf den Transportbahn (3-6) abgesetzt sind und zweireihig um einen halben Durchmesser versetzt auf der Transportbahn entlang der Milch- und Bruchbehandlungsstationen geführt werden und in diesem Transportsystem hinter der Ausgießstation eine Reinigungsstation (15) für die Behälter (1) vorgesehen ist.

2. Vorrichtung nach Anspruch 1, dadurch gekennzeichnet, daß die Käsebruchbehandlungsstationen (8 bis 12) entlang einer im wesentlichen geraden Strecke (3) der Transportbahn angeordnet sind.

3. Vorrichtung nach Anspruch 1, dadurch gekennzeichnet, daß die Behälter (1) je einen flachen, ggf mit Transportkufen verstärkten Boden (2) aufweisen und damit direkt auf der Transportbahn abgesetzt sind.

4. Vorrichtung nach einem der Ansprüche 1 bis 3, dadurch gekennzeichnet, daß die Behälter als einfache, innen und außen leicht zu reinigende, zylindrische Behälter, mit flachen Boden, ausgeführt sind.

5. Vorrichtung nach Anspruch 1, dadurch gekennzeichnet, daß die Transportbahn eine Vielzahl von parallel liegenden Wellen aufweist, die mittels eines gemeinsamen, stufenlos regelbaren Triebwerkes angetrieben werden.

6. Vorrichtung nach einem der Ansprüche 1 bis 5, dadurch gekennzeichnet, daß die Reinigungsstation (15) von der Umgebung abgeschlossen ist, um zu gewährleisten, daß der Reinigungsvorgang ohne Beeinträchtigung der Umgebung stattfinden kann.

7. Vorrichtung nach einem der Ansprüche 1 bis 5, dadurch gekennzeichnet, dass die Ausgießstation (12) mit einer Vorrichtung zum Umkippen und darauf umgekehrt auf die Transportbahn setzen der Behälter (1) versehen ist und hinter der Reinigungsstation (15) eine Wendevorrichtung (17) zum Zurückführen der gereinigten Behälter in die Gebrauchslage vorgesehen ist.

**Claims**

1. A device for the manufacture of cheese substances for preferably soft cheese comprising a closed transport system with several containers arranged on a conveyor belt forming at least part of the closed transport system, a station for filling the containers with the milk to be curdled, devices mounted on the belt of the containers for cutting the curdled milk into portions and a station for emptying the containers into a discharge channel, characterized in that the containers (1) are individually placed on the conveyor belt (3-6) in two rows staggered by half a diameter, and are conveyed along the milk- and curdle-treating stations, and a station (15) for cleaning the containers (1) is provided in this transport system behind the emptying station.

2. A device according to Claim 1, characterized in that the cheese curdle-treating stations (8-12) are arranged along an essentially straight path (3) of the conveyor belt.

3. A device according to Claim 1, characterized in that the containers (1) each have a flat bottom (2), optionally reinforced with transporting slides, and are directly placed therewith on the conveyor belt.

4. A device according to any one of Claims 1-3, characterized in that the containers are designed as simple, cylindrical flat-bottomed containers, which can be easily cleaned inside and outside.

5. A device according to Claim 3, characterized in that the conveyor belt has a plurality of parallel rolls which are driven by a common driving mechanism with infinitely variable speed.

6. A device according to any one of Claims 1-5, characterized in that the cleaning station (15) is sealed from the surrounding area to ensure that the cleaning step can take place without interference from the surrounding environment.

7. A device according to any one of Claims 1-5, characterized in that the emptying station (12) is provided with a device for tipping over and subsequently placing the containers (1) in inverted position on the conveyor belt, and behind the cleaning station (15) a turning device (17) is provided for returning the cleaned containers to the site of usage.

**Revendications**

1. Installation de fabrication de caillé pour des fromages à pâte molle de préférence, qui comprend un système fermé de transfert avec plusieurs récipients disposés sur une piste de transfert formant au moins une partie du système fermé de transfert, un poste de remplissage du lait à épaissir dans les récipients, des dispositifs placés sur le trajet des récipients pour couper le lait épaissi en morceaux et un poste pour vider les récipients dans une rigole d'écoulement, caractérisé en ce qu'on place les récipients (1) individuellement sur la piste de transfert (3-6) et qu'ils avancent en deux rangées décalées d'un demi-diamètre sur la piste de transfert le long des postes de traitement de lait et de caillé et qu'on a prévu dans ce système de transfert, après le poste de vidange, un poste de nettoyage (15) des récipients (1).

2. Installation selon la revendication 1, caractérisée en ce que les postes de traitement de caillé (8 à 12) se trouvent le long d'une ligne (3) essentiellement droite de la piste de transfert.

3. Installation selon la revendication 1, caractérisée en ce que chaque récipient (1) présente un fond plat (2) renforcé le cas échéant par des patins de transfert et s'appuient ainsi directement sur la piste de transfert.

4. Installation selon l'une des revendications 1 à 3, caractérisée en ce qu'on réalise les récipients sous forme de récipients cylindriques simples, faciles à nettoyer intérieurement et extérieurement, à fonds plats.

5. Installation selon la revendication 3, caractérisée en ce que la piste de transfert présente un grand nombre d'ondulations parallèles, qu'on peut entrainer ensemble au moyen d'un moteur à vitesse réglable en continu.

6. Installation selon l'une des revendications 1 à 5, caractérisée en ce que le poste de nettoyage (15) est isolé de l'environnement, pour garantir que le processus de nettoyage puisse se faire sans polluer l'environnement.

7. Installation selon l'une des revendications 1 à 5, caractérisée en ce que le poste de vidange (12) comprend un dispositif de renversement qui place les récipients ensuite à l'envers sur la piste de transfert, et après le poste de nettoyage (15), il y a un dispositif de retournement (17) pour recycler les récipients nettoyés en position de service.

FIG. 2

FIG. 1